# FASCICULE DE BREVET EUROPEEN

(11) **EP 0 471 064 B1**
(45) Date de publication et mention de la délivrance du brevet: **10.07.1996**
(21) Numéro de dépôt: 91906177.0
(22) Date de dépôt: 01.03.1991
(51) Int. Cl.: B01D 53/04, B01D 53/047, B01D 53/053

(54) **PROCEDE DE PRODUCTION D'OXYGENE PAR SEPARATION D'AIR PAR ADSORPTION**
VERFAHREN ZUR SAUERSTOFFPRODUKTION DURCH LUFTTRENNUNG MITTELS ADSORPTION
METHOD FOR PRODUCING OXYGEN BY ADSORPTION SEPARATION FROM AIR

(30) Priorité: 02.03.1990 FR 9002617
(43) Date de publication de la demande: 19.02.1992
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: ETEVE, Sylvie, F-92260 Fontenay-aux-Roses (FR); HAY, Léon, F-75013 Paris (FR); ROTTNER, Thomas, F-77116 Recloses (FR)
(74) Mandataire: Le Moenner, Gabriel
(86) Numéro de dépôt international: FR9100164
(87) Numéro de publication internationale: WO9112874

(56) Documents cités:
- EP-A- 0 092 153
- EP-A- 0 103 070
- EP-A- 0 324 171
- EP-A- 0 334 495
- WO-A-87/00076

## Description

La présente invention concerne un procédé de production d'oxygène par séparation d'air par adsorption, du type mettant en oeuvre deux adsorbeurs et une capacité d'oxygène avec, pour chaque adsorbeur, un cycle se déroulant sur une période de durée T, décalé d'un adsorbeur à l'autre d'une durée T/2 et comprenant les étapes suivantes :
a) une première phase de repressurisation à partir de la pression basse du cycle jusqu'à une pression intermédiaire par admission d'oxygène provenant de la capacité et de l'autre adsorbeur en sa phase d) ;
b) une seconde phase de repressurisation, de la pression intermédiaire jusqu'à sensiblement la pression haute du cycle, avec admission d'air à co-courant, sans soutirage d'oxygène ;
c) une phase de production d'oxygène avec admission d'air et soutirage d'oxygène à co-courant ;
d) une phase de soutirage d'oxygène par dépressurisation partielle à co-courant, l'admission d'air étant interrompue ;
e) une phase de désorption par pompage à contre-courant jusqu'à la pression basse du cycle, qui est inférieure à la pression atmosphérique.

Un procédé de ce type est connu du document EP-A-0.334.495 qui décrit une repressurisation avec admission continue, jusqu'à la phase de production, d'oxygène produit.

Le document US-A-3.738.087 décrit un cycle mixte de production d'oxygène à deux adsorbeurs sans capacité de gaz de production.

Le document EP-A-0.092.153 décrit un cycle superatmosphérique de production d'azote.

Le document WO-A-87/00076 décrit des cycles subatmosphériques de production de dioxyde de carbone.

L'invention a pour objet de proposer un procédé présentant une grande souplesse d'utilisation, en particulier en cycle dit "mixte" (super- et sub-atmosphérique), et permettant des performances améliorées de façon à obtenir de l'air enrichi en oxygène jusqu'à une teneur en oxygène supérieure à 95 %, tout en réduisant les coûts d'investissement et de production grâce au choix d'un domaine approprié de pressions et grâce au maintien, dans une séquence de phases adaptées, d'un taux d'utilisation élevé des machines tournantes (compresseur et/ou pompe).

Pour ce faire, selon une caractéristique de l'invention, durant l'étape a), l'oxygène de repressurisation provenant de la capacité d'oxygène et de l'autre adsorbeur est introduit à contre-courant et en ce que, durant l'étape b), la repressurisation s'effectue par seule admission d'air à co-courant.

Selon l'invention, on peut mettre en oeuvre les façons de faire suivantes, séparément, ou en toute combinaison :
- la pression haute du cycle est choisie entre 1,2 et 2 x 10⁵ Pa absolus et, de préférence, entre 1,4 et 1,7 x 10⁵ Pa absolus, alors que la pression basse est choisie entre 0,3 et 0,7 x 10⁵ Pa absolus et, de préférence, entre 0,35 et 0,5 x 10⁵ Pa absolus, la phase de désorption étant effectuée au moins dans sa partie finale par pompage ;
- la pression au cours de la phase c) de production est substantiellement isobare à la pression haute de cycle ;
- la phase e) de désorption incorpore un soutirage d'élution sensiblement à la pression basse, et à contre-courant ;
- le transfert de gaz de l'adsorbeur en cours de dépressurisation vers l'adsorbeur en cours de repressurisation s'effectue sensiblement jusqu'à équilibrage des pressions ;
- le transfert s'effectue en totalité à co-courant pour l'adsorbeur en cours de dépressurisation et avantageusement à contre-courant pour l'adsorbeur en cours de repressurisation ;
- dans une étape initiale, le transfert inter-adsorbeurs s'effectue à co-courant pour l'adsorbeur en cours de dépressurisation, à contre-courant pour l'adsorbeur en cours de repressurisation, alors que dans une étape suivante, ce transfert s'effectue à co-courant pour l'adsorbeur en cours de dépressurisation et à co-courant pour l'adsorbeur en cours de repressurisation ;
- entre l'étape de dépressurisation partielle à co-courant et l'étape de pompage à contre-courant, il est prévu une étape intermédiaire de dépressurisation à contre-courant jusqu'à la pression atmosphérique par mise à l'air ;
- l'étape d'élution sous pompage s'effectue à pression sensiblement constante ;
- l'étape à pression basse peut comporter des variations légères de pression ;
- l'étape à pression basse s'effectue sans soutirage d'élution, notamment lorsque la pression basse du cycle est au voisinage de 0,3 x 10⁵ Pa absolus ;
- la phase de production présente une étape initiale isobare suivie d'une étape terminale à pression décroissante ;
- l'étape terminale à pression décroissante de la phase de production débute avec l'étape d'élution de l'autre adsorbeur, qui est effectuée avec du gaz prélevé sur le débit de production ;
- on débute l'étape de pompage à contre-courant avant la fin de l'étape de transfert du gaz de dépressurisation à co-courant vers l'adsorbeur en cours de repressurisation partielle.

Grâce à l'adoption d'un cycle dit "mixte" dans un domaine de pressions relativement étroit et spécifique, on peut envisager l'utilisation de machines plus simples et donc moins coûteuses que celles qui sont nécessaires dans les cycles "Pression" ou "Vide".

L'énergie consommée par ces machines qui travaillent dans un domaine de pression étroit où leur rendement est optimal est ainsi minimisée.

La comparaison de l'énergie spécifique de production d'oxygène de teneur élevée, par exemple supérieure à 85 %, en cycle "mixte", par rapport aux autres cycles à pleine utilisation des machines, peut s'établir comme suit :
- vis-à-vis des cycles sous pression super-atmosphérique, on dépense une énergie plus faible ;
- vis-à-vis des cycles "vide" à pression basse plus faible que 0,2 x 10⁵ Pa, on dépense également une énergie plus faible ;
- vis-à-vis des cycles "vide" à pression basse maintenue à 0,2/0,3 x 10⁵ Pa, on dépense une énergie semblable.

Le maintien d'une pression haute supérieure à la pression atmosphérique dans le cycle mixte permet de bénéficier d'une augmentation de productivité par rapport à un cycle de type "vide".

Le cycle selon l'invention ne vise que la production d'oxygène, l'autre fraction de la séparation n'étant constituée que d'air moyennement enrichi en azote. En contrepartie, l'énergie spécifique de la séparation est bien plus faible.

Le taux d'utilisation des machines dans la solution proposée est très élevé, tandis que certains cycles connus présentés comme réalisables avec deux adsorbeurs ne sont en fait applicables industriellement et économiquement qu'avec trois adsorbeurs, le plus souvent pour des raisons de meilleure utilisation des machines.

La solution selon l'invention est fondée également sur le déroulement d'un cycle qui comporte une production par soutirage qui n'est effectuée qu'après le chargement de l'adsorbeur à la pression haute du cycle et préférentiellement au cours d'une étape isobare à cette même pression haute, ce qui a pour conséquence de porter, durant cette étape, le taux de charge de l'adsorbant, en azote arrêté, à sa valeur maximale pour cette pression haute, valeur qui n'est pas atteinte lorsque la production, ou partie de la production, est soutirée à pression croissante. Il en résulte une amélioration des performances avec la solution proposée.

L'invention va maintenant être décrite en référence aux dessins, sur lesquels :
- la figure 1 présente l'évolution de la pression d'un adsorbeur au cours des différentes phases d'un cycle complet (T), l'autre adsorbeur subissant le même cycle avec un déphasage dans le temps de T/2 ;
- la figure 2 est un schéma de l'installation correspondant au procédé de la figure 1 ;
- les figures 3 et 4 sont des vues analogues à la figure 1 de deux variantes de mise en oeuvre du procédé.

Dans la présente description et dans les revendications, l'expression "oxygène" signifie le gaz produit par séparation de l'air, c'est-à-dire de l'air considérablement enrichi en oxygène ou de l'oxygène non totalement pur.

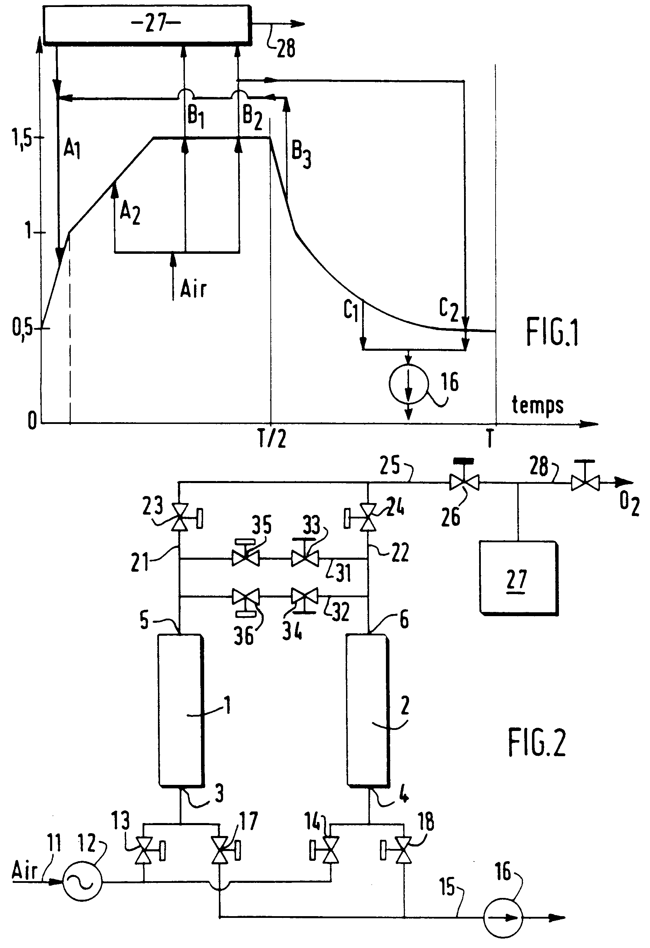

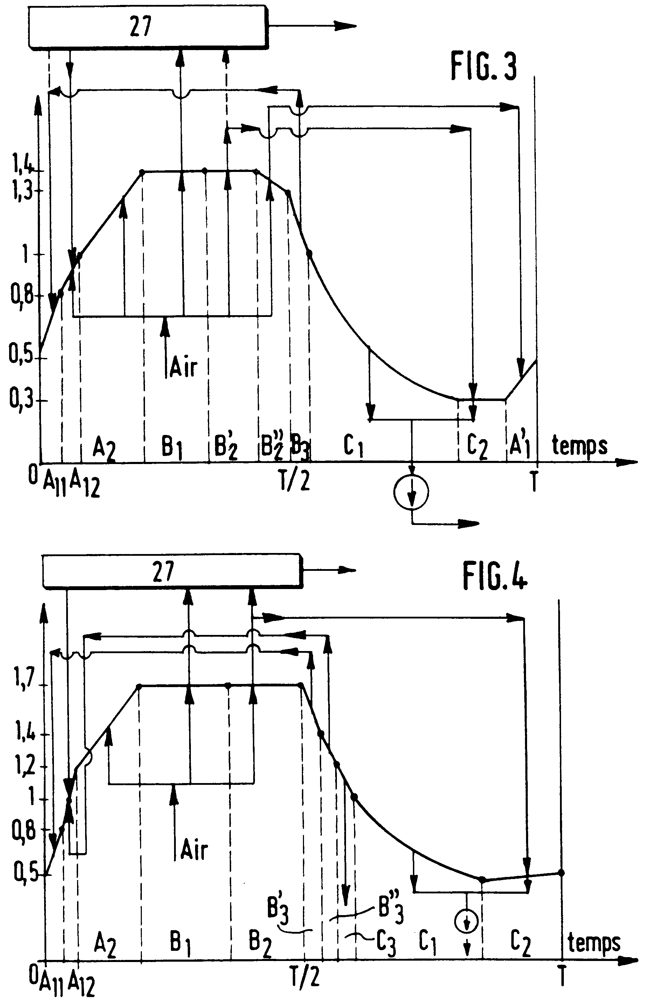

En se référant aux figures 1 et 2, et a titre d'illustration, le cycle est décrit sur une durée de 120 secondes et entre une pression haute de 1,5 x 10⁵ Pa absolus et une pression basse de 0,5 x 10⁵ Pa absolus.

Le cycle est ici appliqué à une installation à deux adsorbeurs à tamis moléculaire 1 et 2 ayant chacun une entrée 3, 4 et une sortie 5, 6 (définition donnée pour la circulation dite à co-courant, alors que les fonctions sont inverses dans la circulation dite à contre-courant de la "sortie" 5 (ou 6) vers "l'entrée" 3 (ou 4).

Chaque entrée 3, 4 est raccordée, d'une part à une conduite d'admission d'air 11 à machine soufflante ou compresseur 12 via une vanne 13 (14), d'autre part, via une vanne 17, (18), à une conduite de vidage 15 incorporant une pompe à vide 16.

Les sorties 5 (6) communiquent avec des conduites de "sortie" 21, 22 raccordées via une vanne 23, 24 à une conduite de production 25 à vanne régulatrice 26 vers une capacité de stockage 27, de laquelle part une conduite distributrice 28 d'oxygène (fortement enrichi en oxygène).

Les conduites de "sortie" 21 et 22 sont raccordées entre elles par deux conduites 31, 32 incorporant chacune une vanne 35, 36 et une vanne de régulation 33, 34.

En se référant à la figure 1, le procédé comporte les phases et les étapes suivantes en partant de la pression basse du cycle, par exemple d'environ 0,5 x 10⁵ Pa absolus :
- une phase de repressurisation initiale partielle A₁ à contre-courant de l'adsorbeur 1 par de l'oxygène provenant simultanément de l'adsorbeur 2 en phase de décompression à co-courant (étape B₃ ci-dessous) et de la capacité 27, de sorte que la pression atteinte est voisine de 1 x 10⁵ Pa absolus (via 34, 36 et 26, 23) ;
- une phase d'adsorption en trois étapes :
   . une étape de recompression finale A₂ de l'adsorbeur 1 par simple admission d'air introduit à co-courant (via 11, 12, 13, 3); la pression atteinte étant d'environ 1,5 x 10⁵ Pa absolus ;
   . deux étapes de soutirage ou de production à co-courant :
      + une étape isobare B₁ effectuée par poursuite de l'admission d'air à co-courant et à la pression haute du cycle (via 5, 11, 12, 3, 3), avec soutirage simultané de gaz enrichi en oxygène (via 21, 23, 25, 26) dirigé vers la capacité de stockage en oxygène (27),
      + une poursuite B₂ de l'étape précédente B₁, avec admission d'air (via 11, 12, 13, 3) et soutirage simultanés à co-courant (via 5, 21, 23, 25, 26), mais avec prélèvement (via 33, 35) d'au moins une partie du gaz soutiré comme gaz d'élution qui est introduit à contre-courant dans l'adsorbeur (2) (étape C₂ ci-après). La fraction du soutirage non prélevée est dirigée vers la capacité de stockage 27. Cette étape est réalisée ici et préférentiellement de façon isobare, à la pression haute du cycle ;
   . une étape de décompression partielle B₃ à co-courant par égalisation (via 36, 34) des pressions avec l'autre adsorbeur en étape de repressurisation A₁ jusqu'à une pression d'environ 1 x 10⁵ Pa. Le gaz transféré est un gaz enrichi en oxygène ;
- une phase de régénération à contre-courant, effectuée en deux étapes :
   . pompage C₁ (via 3, 17, 15, 16) de l'adsorbant de 1 x 10⁵ Pa à environ 0,5 x 10⁵ Pa ;
   . élution C₂ (via 33, 35, 21, 5, 3, 17, 15, 16) sous pompage sensiblement isobare à une pression voisine de 0,5 x 10⁵ Pa par admission à contre-courant du gaz prélevé en phase B₂ sur l'autre adsorbeur.

On peut, sur la base du cycle décrit en relation avec les figures 1 et 2, réaliser de nombreuses variantes d'une ou plusieurs phases sans modifier le déroulement et les caractéristiques générales des phases.

La plupart de ces variantes sont introduites pour adapter ce type de cycle en fonction du domaine des pressions retenu et des plages d'utilisation des machines, sachant par exemple qu'il est souhaitable de faire démarrer si possible l'étape de pompage à la pression atmosphérique, ou encore que la progression du front d'adsorption dans l'adsorbeur au cours des étapes B₁ à B₃ dépend du paramètre "pression" du cycle :
- la phase de repressurisation initiale A₁, (B₃) réalisant un pseudo "équilibrage" entre les deux adsorbeurs, peut être interrompue avant d'obtenir l'égalité des pressions entre les deux adsorbeurs ;
- l'étape C₁ de pompage peut être précédée dans la phase de régénération d'une étape (C₃) de décompression à contre-courant par mise à l'air si la pression intermédiaire en fin d'étape B₃ est supérieure à la pression atmosphérique ;
- l'étape C₂ d'élution peut être effectuée à pression croissante ou décroissante selon l'importance du débit prélevé en phase B₂ et le débit de la pompe 16 à la pression basse ;
- le gaz prélevé à l'étape B₂ pour l'élution C₂ peut être utilisé d'abord pour éluer, puis pour amorcer la recompression à contre-courant ou, à la limite, être utilisé intégralement pour ce début de recompression en renonçant à toute élution. On sait en effet que l'élution est d'autant moins nécessaire que la pression "basse" du cycle est faible :
- l'étape B₂ au cours de laquelle un prélèvement est effectué sur le soutirage peut être effectuée à pression décroissante, ceci en particulier si le débit nécessaire pour l'élution et/ou éventuellement le débit de recompression est plus important que celui qui serait obtenu par une étape B₂ isobare ;
- le gaz soutiré en fin de décompression de l'étape B₃ peut être recyclé à co-courant et traité comme l'air au cas où il serait insuffisamment enrichi en oxygène. On a alors un équilibrage en B₃ et A₁ dit de la "sortie à l'entrée" ("top to bottom") (cf. figure 4), différent de celui décrit précédemment qui est de "sortie à la sortie" ("top to top"). De même que précédemment, cet équilibrage peut n'être que partiel ;
- l'admission à contre-courant dans l'adsorbeur d'oxygène de recompression en provenance de la capacité 27 peut être prolongée après A₁ et avant A₂, au cours d'une étape supplémentaire intermédiaire de recompression ne comportant que cette admission à contre-courant d'oxygène, au cours d'une étape supplémentaire finale de recompression comportant simultanément cette admission à contre-courant d'oxygène de la capacité 27 et d'air à co-courant ;
- tout ou partie de l'étape B₃, au cours de laquelle du gaz est soutiré à co-courant, peut être réalisée simultanément avec le début de la phase C de régénération au cours de laquelle du gaz est soutiré à contre-courant, notamment par pompage, ce qui présente l'intérêt d'augmenter le taux d'utilisation de la machine (éventuellement jusqu'à 100 %). Il y a alors chevauchement partiel dans le temps des deux étapes B₃ et C₁, chacune gardant sa fonction propre.

A titre d'illustration, la figure 3 fournit un exemple de réalisation incorporant quelques unes de ces variantes introduites dans le cycle pour adapter ce dernier aux conditions de pression différentes de celles retenues figure 1. On notera notamment que la phase de repressurisation initiale A₁ depuis la pression basse du cycle (ici d'environ 0,3 x 10⁵ Pa) se décompose en une première et une deuxième phases A'₁ et A₁₁ de recompression par équilibrage partiel avec le deuxième adsorbeur, et une troisième phase A₁₂ avec introduction simultanée du gaz provenant, à contre-courant, de la capacité 27 et, à co-courant, de l'air d'alimentation, et que la phase de soutirage B₂ comporte une première phase B'₂ servant à l'élution (C₂) et une seconde phase B''₂ servant à la première phase de recompression A'1. Comme indiqué en pointillés, la deuxième phase de recompression A₁₁ peut n'être effectuée que par transfert de gaz en provenance de l'autre adsorbeur en décompression (B₃).

De même, la mise en oeuvre selon la figure 4 se distingue de celle de la figure 1 en ce qu'on prévoit une étape de mise à l'air C₃, précédant le pompage C₁, C₂, une élution C₂ qui s'effectue à pression croissante, et, avant A₂, une étape A'₁₂ de recompression partielle est réalisée simultanément par admission à contre-courant de gaz provenant de la capacité 27 et par admission à co-courant de gaz soutiré de l'autre adsorbeur en fin de décompression à co-courant B''₃.

## Revendications

1. Procédé de production d'oxygène par séparation d'air par adsorption du type mettant en oeuvre deux adsorbeurs (1 ; 2) et une capacité d'oxygène (27) avec, pour chaque adsorbeur, un cycle se déroulant sur une période de durée T, décalé d'un adsorbeur à l'autre d'une durée T/2 et comprenant les étapes suivantes :
a) une première phase de repressurisation (A₁) à partir de la pression basse du cycle jusqu'à une pression intermédiaire par admission d'oxygène provenant de la capacité (27) et de l'autre adsorbeur en sa phase d) ;
b) une seconde phase de repressurisation (A₂), de la pression intermédiaire jusqu'à sensiblement la pression haute du cycle, avec admission d'air à co-courant, sans soutirage d'oxygène ;
c) une phase (B₁, B₂) de production d'oxygène avec admission d'air et soutirage d'oxygène à co-courant ;
d) une phase (B₃) de soutirage d'oxygène par dépressurisation partielle à co-courant, l'admission d'air étant interrompue ;
e) une phase (C₁, C₂) de désorption par pompage à contre-courant jusqu'à la pression basse du cycle, qui est inférieure à la pression atmosphérique,
caractérisé en ce que, durant l'étape a), l'oxygène de repressurisation provenant de la capacité (27) et de l'autre adsorbeur est introduit à contre-courant, et en ce que, durant l'étape b), la repressurisation jusqu'à la pression haute du cycle (A₂) s'effectue par seule admission d'air à co-courant.

2. Procédé selon la revendication 1, caractérisé en ce que, pendant toute la phase a), on admet simultanément de l'oxygène provenant de la capacité (27) et de l'autre adsorbeur.

3. Procédé selon la revendication 1, caractérisé en ce que la phase a) comporte une sous-phase initiale (A'₁, A₁₁) de repressurisation par l'oxygène provenant de l'autre adsorbeur et une sous-phase ultérieure (A₁₂, A'₁₂) de repressurisation avec de l'oxygène provenant de la capacité (27).

4. Procédé selon la revendication 3, caractérisé en ce que, pendant la sous-phase ultérieure de repressurisation (A₁₂), on admet également de l'air à co-courant.

5. Procédé selon l'une des revendication 1 à 4, caractérisé en ce que la pression intermédiaire en fin de phase a) est inférieure ou égale à 1 x 10⁵ Pa.

6. Procédé selon l'une des revendications précédentes, caractérisé en ce que la pression de la phase de production c) est sensiblement isobare, à la pression haute du cycle.

7. Procédé selon l'une des revendications précédentes, caractérisé en ce qu'il comporte, en fin de phase e), une phase (C₂) d'élution sous pompage sensiblement isobare à la pression basse du cycle.

8. Procédé selon la revendication 7, caractérisé en ce que pendant la phase (C₂) d'élution, on admet à contre-courant de l'oxygène produit provenant de l'autre adsorbeur en fin (B₂) de phase c) de production.

9. Procédé selon la revendication 8, caractérisé en ce que, en fin (B₂) de phase de production c), une part de l'oxygène produit est simultanément envoyée à la capacité (27).

10. Procédé selon l'une des revendications précédentes, caractérisé en ce que la pression haute du cycle est comprise entre 1,2 x 10⁵ Pa et 2 x 10⁵ Pa.

11. Procédé selon l'une des revendications précédentes, caractérisé en ce que la pression basse du cycle est comprise entre 0,3 x 10⁵ Pa et 0,7 x 10⁵ Pa.

## Claims

1. Process for the production of oxygen by the separation of air by adsorption of the type employing two adsorbers (1; 2) and an oxygen storage vessel (27) with, for each adsorber, a cycle proceeding over a period of time T, out of phase from one adsorber to another by a period T/2 and comprising the following stages :
a) a first repressurization phase (A₁) from the low pressure of the cycle to an intermediate pressure by admission of oxygen derived from the storage vessel (27) and the other adsorber in its phase d);
b) a second repressurization phase (A₂) from the intermediate pressure to essentially the high pressure of the cycle, with co-current admission of air, without withdrawal of oxygen;
c) a phase (B₁,B₂) for the production of oxygen with co-current admission of air and withdrawal of oxygen;
d) a phase (B₃) with withdrawal of oxygen by co-current partial depressurization, air admission being interrupted;
e) a desorption phase (C₁,C₂) by counter-current pumping to the low pressure of the cycle, which is less than atmospheric pressure,
characterized in that, during stage a), repressurizing oxygen derived from the storage vessel (27) and from the other adsorber is introduced counter-currently, and in that, during stage b), repressurization is carried out to the high pressure of the cycle (A₂) only by admitting air co-currently.

2. Process according to claim 1, characterized in that, during all phase a), oxygen derived from the storage vessel (27) and from the other adsorber are admitted simultaneously.

3. Process according to claim 1, characterized in that phase a) comprises an initial repressurization sub-phase (A'₁,A₁₁) by oxygen derived from the other adsorber and a subsequent repressurization sub-phase (A₁₂,A'₁₂) with oxygen derived from the storage vessel (27).

4. Process according to claim 3, characterized in that, during the subsequent repressurization sub-phase (A₁₂) air is also admitted co-currently.

5. Process according to one of claims 1 to 4, characterized in that the intermediate pressure at the end of phase a) is less than or equal to 1 × 10⁵ Pa.

6. Process according to one of the preceding claims, characterized in that the pressure of the production phase c) is essentially isobaric, at the high pressure of the cycle.

7. Process according to one of the preceding claims, characterized in that it comprises, at the end of phase e) an elution phase (C₂) with essentially isobaric pumping at the low pressure of the cycle.

8. Process according to claim 7, characterized in that during the elution phase (C₂), oxygen produced, which is derived from the other adsorber at the end (B₂) of the production phase c), is admitted co-currently.

9. Process according to claim 8, characterized in that, at the end (B₂) of the production phase c), part of the oxygen produced is simultaneously conveyed to the storage vessel (27).

10. Process according to one of the preceding claims, characterized in that the high pressure of the cycle is between 1.2 × 10⁵ Pa and 2 × 10⁵ Pa.

11. Process according to one of the preceding claims, characterized in that the low pressure of the cycle is between 0.3 × 10⁵ Pa and 0.7 × 10⁵ Pa.

## Patentansprüche

1. Verfahren zur Sauerstoffproduktion durch Lufttrennung mittels Adsorbtion mit zwei Adsorbern (1; 2) und einem Sauerstoffvorrat (27) mit einem Zyklus für jeden Adsorber mit der Periodendauer T, der von einem Adsorber zum nächsten um T/2 phasenverschoben ist und folgende Schritte umfaßt:
a) eine erste Nachverdichtung (A₁) von einem niedrigen Zyklusdruck auf einen mittleren Druck durch Sauerstoffzufuhr aus dem Vorrat (27) und aus dem anderen Adsorber, während dieser sich im Zustand gemäß Schritt d) befindet;
b) eine zweite Nachverdichtung (A₂) von dem mittleren Druck bis auf den hohen Zyklusdruck mit Luftzuführung im Gleichstrom ohne Sauerstoffentnahme;
c) Sauerstoffproduktion (B₁, B₂) mit Luftzuführung und Sauerstoffentnahme im Gleichstrom;
d) Sauerstoffentnahme (B3) mittels partieller Entspannung im Gleichstrom, wobei die Luftzuführung unterbrochen wird;
e) Desorbtion (C1, C2) mittels Pumpen im Gegenstrom bis auf den niedrigen Zyklusdruck, welcher unter dem Atmosphärendruck liegt,
dadurch gekennzeichnet, daß im Schritt a) der nachverdichtete Sauerstoff aus dem Vorrat (27) und dem anderen Adsorber im Gegenstrom eingeführt wird, und daß im Schritt b) die Nachverdichtung bis auf den hohen Zyklusdruck (A₂) lediglich durch Luftzufuhr im Gleichstrom erfolgt.

2. Verfahren nach Anspruch 1, dadurch gekennzeichnet, daß während des gesamten Schritts a) gleichzeitig Sauerstoff aus dem Vorrat (27) und dem anderen Adsorber zugeführt wird.

3. Verfahren gemäß Anspruch 1, dadurch gekennzeichnet, daß Schritt a) zunächst einen Nachverdichtungs-Zwischenschritt (A'₁, A₁₁) des Sauerstoffs aus dem Vorrat (27) und dem anderen Adsorber, sowie einen nachfolgenden Nachverdichtungs-Zwischenschritt (A₁₂, A'₁₂) mit dem Sauerstoff aus dem Vorrat (27) umfaßt.

4. Verfahren nach Anspruch 3, dadurch gekennzeichnet, daß während des nachfolgenden Nachverdichtungs-Zwischenschritt (A₁₂) auch Luft im Gleichstrom zugeführt wird.

5. Verfahren nach einem der Ansprüche 1 bis 4, dadurch gekennzeichnet, daß der mittlere Druck am Ende von Schritt a) kleiner oder gleich 1 x 10⁵ Pa ist.

6. Verfahren nach einem der vorstehenden Ansprüche, dadurch gekennzeichnet, daß der Druck des Produktionsschrittes c) im wesentlichen konstant und gleich dem hohen Zyklusdruck ist.

7. Verfahren nach einem der vorstehenden Ansprüche, dadurch gekennzeichnet, daß es am Ende von Schritt e) eine Elution (C₂) unter Pumpen mit im wesentlichen konstantem Druck, der gleich dem niedrigen Zyklusdruck ist, umfaßt.

8. Verfahren nach Anspruch 7, dadurch gekennzeichnet, daß während des Elutionsschrittes (C₂) von dem anderen Adsorber am Ende (B₂) des Produktionschrittes c) kommender Produktsauerstoff im Gegenstrom zugeführt wird.

9. Verfahren nach Anspruch 8, dadurch gekennzeichnet, daß am Ende (B₂) des Produktionsschrittes c) gleichzeitig ein Teil des Sauerstoffproduktes in den Vorrat (27) eingeleitet wird.

10. Verfahren nach einem der vorstehenden Ansprüche, dadurch gekennzeichnet, daß der hohe Zyklusdruck zwischen 1,2 x 10⁵ Pa und 2 x 10⁵ Pa liegt.

11. Verfahren nach einem der vorstehenden Ansprüche, dadurch gekennzeichnet, daß der niedrige Zyklusdruck zwischen 0,3 x 10⁵ Pa und 0,7 x 10⁵ Pa liegt.
